# EUROPEAN PATENT SPECIFICATION

(11) **EP 2 902 309 B1**
(45) Date of publication and mention of the grant of the patent: **17.10.2018**
(21) Application number: 13868388.3
(22) Date of filing: 16.12.2013
(51) Int. Cl.: B63B 1/38

(54) **SHIP HAVING REDUCED FRICTIONAL RESISTANCE**
SCHIFF MIT REDUZIERTEM REIBUNGSWIDERSTAND
NAVIRE À RÉSISTANCE DE FROTTEMENT RÉDUITE

(30) Priority: 25.12.2012 JP 2012281828
(43) Date of publication of application: 05.08.2015
(73) Proprietor: Mitsubishi Shipbuilding Co., Ltd., Yokohama-shi Kanagawa 220-8401 (JP)
(72) Inventor: KAWAKITA, Chiharu, Tokyo 108-8215 (JP); SAWAI, Takayuki, Tokyo 108-8215 (JP); SHIGENAGA, Ryosuke, Tokyo 108-8215 (JP); TAKANO, Shinichi, Tokyo 108-8215 (JP)
(74) Representative: Henkel, Breuer & Partner
(86) International application number: PCT/JP2013/083586
(87) International publication number: WO 2014/103771

(56) References cited:
- JP-A- H11 227 675
- JP-B1- 5 087 158
- JP-B1- 5 087 158
- JP-B2- 5 022 346
- US-A- 4 840 589
- US-A- 5 967 071

## Description

### Technical Field

The present invention relates to a frictional resistance reduction type ship, and more particularly to a frictional resistance reduction type ship using air lubrication method.

### Background Art

Air lubrication method is known as a resistance reducing method for a ship. For example, in JP 5022346 B, a frictional resistance reduction device for a ship hull is disclosed. This frictional resistance reduction device reduces the fictional resistance of the ship hull in navigating by generating air bubbles and forming a bubble layer on a ship bottom. This frictional resistance reduction device includes an air chamber, a plurality of air ejection holes, a sea chest, and a supply pipe. The air chamber is arranged on the ship bottom inside the ship hull. The plurality of air ejection holes is formed arrayed in the ship bottom which constitutes a bottom of the air chamber. The sea chest is arranged on the ship bottom inside the ship hull so as to cover the air chamber. In the supply pipe, air supplied from an air supply source flows toward the plurality of air ejection holes. The supply pipe passes through the sea chest, and is connected to the air chamber.

In the air lubrication method, it is preferable that the ship bottom is approximately uniformly covered with the air bubbles. Therefore, it is preferable that the air is ejected to form the air bubbles from all of the plurality of air ejection holes aligned in a ship width direction in substantially the same way. However, for example, in a technique according to JP 5022346 B described above, the air is supplied from an upper side of the air chamber using the supply pipe, and the air is ejected from the plurality of air ejection holes on the bottom surface side of the air chamber. In this case, the air is easier to be ejected from the hole just below the supply pipe. As a result, it is difficult to eject the air from all of the plurality of air ejection holes in substantially the same way. The technique with which the air is ejected from the plurality of air ejection holes in substantially the same way to generate the air bubbles is desired, when the air is ejected from the plurality of air ejection holes formed in the ship bottom. Then, the technique with which the ship bottom is approximately uniformly covered with the air bubbles is desired.

As a related technique, a frictional resistance reduction device for the ship hull is disclosed in JP 4959667 B. This frictional resistance reduction device reduces the fictional resistance of the ship hull in navigating by generating air bubbles and forming a bubble layer on a ship bottom. This frictional resistance reduction device includes an air chamber, a plurality of air ejection holes, and a diffusion plate. The air chamber is arranged on the ship bottom inside the ship hull, and an air supply inlet is formed in the air chamber. The plurality of air ejection holes is formed arrayed in the ship bottom which constitutes a bottom of the air chamber. The diffusion plate is arranged inside the air chamber, and disposed between the air supply inlet and the plurality of air ejection holes. The diffusion plate is formed so as to have at least a supply inlet face region which faces to the air supply inlet and a pair of ejection hole face regions which face to the air ejection holes located on the both ends of the arrayed direction of the plurality of air ejection holes.

US 5967071 A discloses a frictional resistance reduction type ship including an air blowing portion disposed on a ship bottom. The structure of the air blowing portion includes air ejection holes located at a forward end of air supply pipes running along the bottom portion of the ship from a rear part thereof.

### Summary of the Invention

The purpose of the present invention is providing a frictional resistance reduction type ship with which it is possible that the air is ejected from the plurality of air ejection holes in substantially the same way to form the air bubbles when the air is ejected from the plurality of air ejection holes disposed in the ship bottom. An alternative purpose of the present invention is providing the frictional resistance reduction type ship with which it is possible that the ship bottom is approximately uniformly covered with the air bubbles.

The invention provides a frictional resistance reduction type ship with the features of claim 1.

The frictional resistance reduction type ship according to the present invention includes an air blowing portion disposed on a ship bottom. The air blowing portion includes an air supply pipe which supplies air, and a chamber portion having an upper surface to which the air supply pipe is connected and a bottom surface having a plurality of air ejection holes. The internal height of the chamber portion ranges from 40 cm to 200 cm. The air blowing portion further includes an access room, a first lid and a second lid. The access room is arranged adjacent to the chamber portion. The first lid can open or close a first access opening formed in a bottom surface of the access room. The second lid can open or close a second access opening formed between the chamber portion and the access room.

Regarding above mentioned frictional resistance reduction type ship, it is preferable that the internal width of the chamber portion ranges from 10 cm to 400 cm, and the internal depth of the chamber portion ranges from 10 cm to 400 cm.

Regarding above mentioned frictional resistance reduction type ship, it is preferable that a distance from a waterline to the ship bottom ranges from 4 meters to 25 meters.

Regarding above mentioned frictional resistance reduction type ship, it is preferable that a side surface and the bottom surface of the chamber portion except the bottom surface are integrally constituted by the same material as the material of the ship bottom.

Regarding above mentioned frictional resistance reduction type ship, it is preferable that the air blowing portion is an air recess.

Regarding above mentioned frictional resistance reduction type ship, it is preferable that the number of the air supply pipe is one.

According to the present invention, it is possible that the air is ejected from the plurality of air ejection holes in substantially the same way to form the air bubbles when the air is ejected from the plurality of air ejection holes disposed in the ship bottom. Alternatively, it is possible that the ship bottom is approximately uniformly covered with the air bubbles.

### Brief Description of the Drawings

Fig. 1 is a side view for schematically indicating a configuration of the frictional resistance reduction type ship serving to explain features of some examples and embodiments;
Fig. 2A is a bottom view for schematically indicating a configuration of an air recess as an air blowing portion according to a first example;
Fig. 2B is a front view for schematically indicating the configuration of the air recess as the air blowing portion according to the first example;
Fig. 2C is a side view for schematically indicating the configuration of the air recess as the air blowing portion according to the first example;
Fig. 3 is a part of a cross-sectional view for schematically indicating a configuration of a lid according to some examples and embodiments;
Fig. 4 is a graph for indicating a standard deviation representing degree of variation of air blow amount from the plurality of air ejection holes formed in the bottom surface of the chamber portion;
Fig. 5 is a perspective view for schematically indicating an alternative example of the air recess as the air blowing portion according to an embodiment of the invention;
Fig. 6 is a bottom view for schematically indicating the configuration of the air recess as the air blowing portion according to a second example;
Fig. 7 is a graph for indicating a distribution of air flow rates ejected from each air ejection hole in case that size of the plurality of air ejection holes disposed in the ship bottom is the same to each other;
Fig.8 is a graph for indicating the distribution of air flow rates ejected from each air ejection hole in case that, regarding the plurality of air ejection holes disposed on the ship bottom, size of forward side air ejection holes is relatively larger than size of backward side air ejection holes.

### Description of Embodiments

The configuration of the frictional resistance reduction type ship according to some examples and embodiments will be explained.

### (First Example)

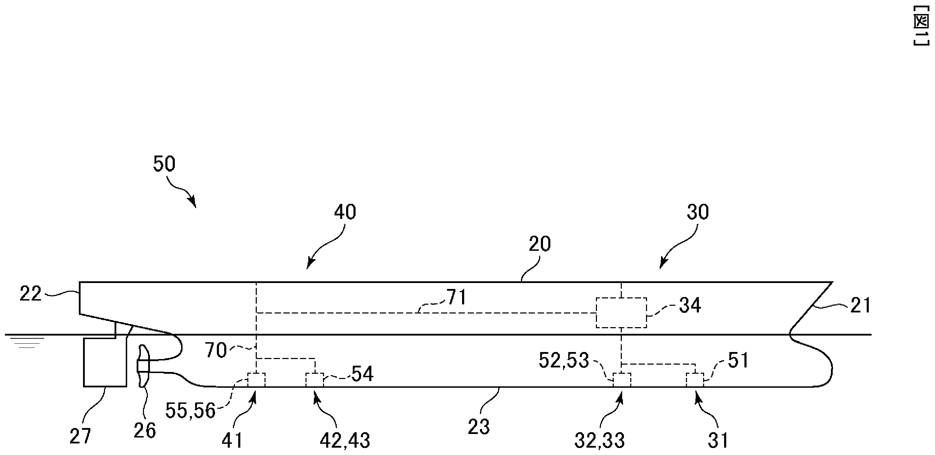

The configuration of the frictional resistance reduction type ship according to the first example serving to explain features of the invention will be explained. Fig. 1 is the side view for schematically indicating the configuration of the frictional resistance reduction type ship according to the present example. The frictional resistance reduction type ship 50 includes a ship hull 20 and an air blowing device 30 installed in the ship hull 20. The ship hull 20 includes a bow 21, a stern 22, a ship bottom 23, a propeller 26, and a rudder 27.

The air blowing device 30 includes air recesses 51 to 53 for supplying air arranged on the bow 21 side portion of the ship bottom 23, and a compressor or blower 34. In navigating, the compressor or blower supplies the air to the air recesses 51 to 53. The air recesses 51 to 53, which serve as the air blowing portions, eject the supplied air from the air ejection holes 31 to 33 into the water. The frictional resistance of the ship hull 20 is reduced by covering the ship bottom 23 with the air bubbles formed by the supplied air. The air ejection holes 31 to 33 are formed in a bottom plate of the air recesses 51 to 53. The bottom plates of the air recesses 51 to 53 are disposed on the same plane as the outer plate of the ship bottom 23. Details of the air recesses 51 to 53 (including air ejection holes 31 to 33) will be explained later.

The frictional resistance reduction type ship 50 may further include an air collecting device 40 installed in the ship hull 20.

The air collecting device 40 includes air collecting chambers 54 to 56 arranged on the stern 22 side portion of the ship bottom 23 and a flow passage 70. Note that the air collecting chambers 54 to 56 have a gas-liquid separating function. Air receiving holes 41 to 43 of the air collecting chambers 54 to 56 are disposed on the stern 22 side from the air ejection holes 31 to 33, and are disposed on the bow 21 side from the propeller 26. The air receiving holes 41 to 43 are formed in the bottom plate of the air collecting chambers 54 to 56. The bottom plates of the air collecting chambers 54 to 56 are disposed on the same plane as the outer plate of the ship bottom 23. The air collecting device 40 receives the air, which the air blowing device 30 ejected into the water, in the air collecting chambers 54 to 56 through the air receiving holes 41 to 43, and executes a gas-liquid separation. The separated air is discharged to the atmosphere through the flow passage 70 or is supplied to the compressor or blower 34 under the higher pressure state than the atmospheric pressure.

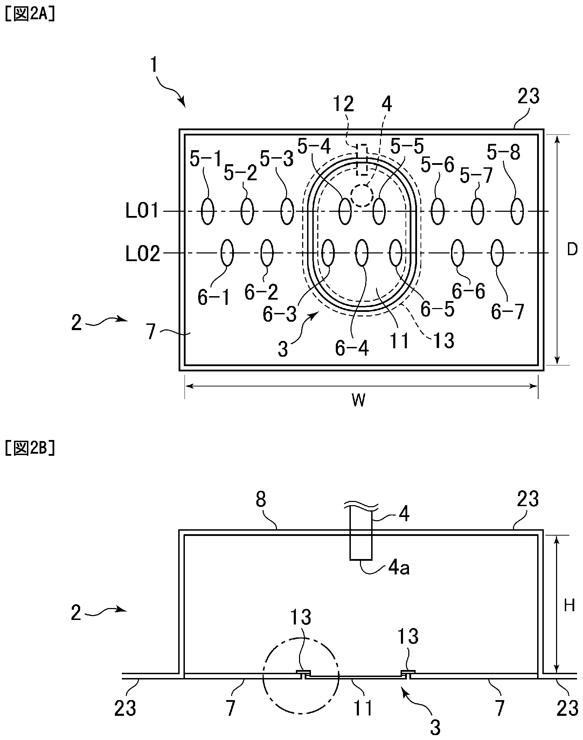

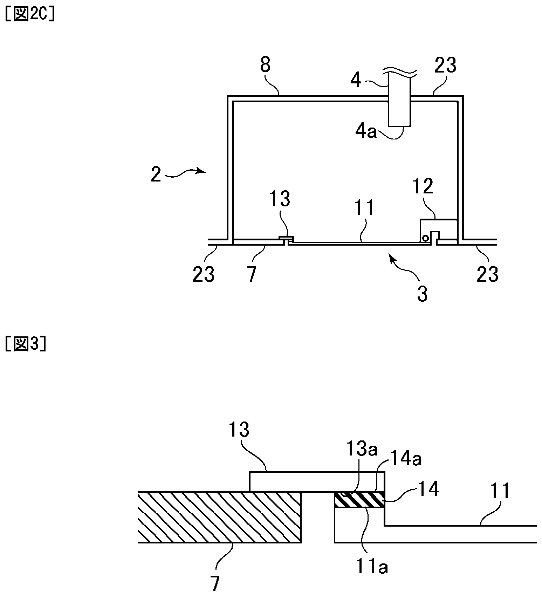

Next, the air recesses 51 to 53 which serve as the air blowing portions according to the present example will be explained. In this explanation, the air recess 1 which is one of the air recesses 51 to 53 will be explained. In other words, the air recess 1 as the air blowing portion will be explained. Figs. 2A to 2C are a bottom view, a front view and a side view, respectively for schematically indicating the configuration of the air recess as the air blowing portion according to the present example. The air recess 1 is a room for accommodating the air. The air recess 1 includes an air supply pipe 4, a chamber portion 2 and a lid 3.

The air supply pipe 4 supplies the air, which is supplied from the compressor or blower 34, to the chamber portion 2. The pressure of the supplied air is a water pressure or more at the ship bottom 23 (for example, in the range of 4 meter water pressure to 25 meter water pressure). The air supply pipe 4 is connected to the upper surface 8 of the chamber portion 2, and the chamber portion 2 includes the plurality of air ejection holes 5, 6 in the bottom surface 7. The chamber portion 2 is filled with the supplied air, keeps the supplied air, and ejects the supplied air via the plurality of air ejection holes 5, 6. The ship bottom 23 is covered with the air bubbles formed by the ejected air from the plurality of air ejection holes 5, 6.

The plurality of air ejection holes 5, 6 is arranged along two straight lines L01, L02 extending parallel to the ship width direction and arranged along the longitudinal direction of the ship in a side-by-side manner. The plurality of air ejection holes 5, 6 are arranged in positions not overlapping each other when viewed from the bow side. In other words, the plurality of air ejection holes 5, 6 is arranged in a staggered arrangement (zigzag arrangement) along the two straight lines L01, L02. In this case, the strength of the ship hull 20 against the longitudinal bending is ensured as compared with the case where the plurality of air ejection holes is arranged along a single straight line. The shape of each of the air ejection holes 5, 6 is not particularly limited, and is exemplified by the circular shape or the oval shape extending to the longitudinal direction of the ship. Note that it is possible to arrange the plurality of air ejection holes in the staggered arrangement for every several holes. The air ejection holes arranged along the straight line L01 extending parallel to the ship width direction are, for example, the air ejection holes 5-1, 5-2, 5-3, 5-4, 5-5, 5-6, 5-7, and 5-8 in order from the starboard side. The air ejection holes arranged along the straight line L02 extending parallel to the ship width direction are, for example, the air ejection holes 6-1, 6-2, 6-3, 6-4, 6-5, 6-6, and 6-7 in order from the starboard side. These numbers are not particularly limited.

The lid 3 is arranged on the bottom surface 7, and opens or closes an access opening for accessing to the inside of the chamber portion 2. The access opening is used, for example, when a work person (a diver) executes maintenance of the inside of the chamber portion 2, etc. That is, the work person (the diver) opens the lid 3 by moving the lid 3 toward the lower side, and executes the maintenance of the chamber portion 2 through the access opening or by entering the chamber portion 2. The lid 3 has a part of the plurality of air ejection holes 5, 6 depending on the installation position of the lid in the bottom surface 7. The lid 3 includes a lid main body 11, a hinge portion 12, and a projecting member 13. Details of these elements will be explained later.

For example, according to JP 5022346B, the air chamber is used for blowing the air. The air chamber is formed in a very small size as compared to the sea chest and arranged inside of the sea chest (corresponding to the air recess chest 1). Therefore, the diver (the work person) cannot execute the maintenance from the side of the seabed. Therefore, the maintenance of the air chamber must be done in the dock only. However, the air recess 1 is formed larger as compared to such air chamber, and the accessible door 3 for accessing to the inside is provided. That is, the diver (the work person) can execute the maintenance of the inside of the air recess 1 from the side of the seabed. In other words, the maintenance is easily performed for this air recess 1.

Note that, when supplying the air from the air supply pipe 4 via the upper surface 8 of the chamber portion 2, it is imagined that the air is easily to be ejected from the air ejection holes 5, 6 directly below the air supply pipe 4. However, according to the present example, the internal height H of the chamber portion 2 is a predetermined height or more corresponding to the water pressure. By making the internal height H equal to or more than the predetermined height, the air can be distributed entirely inside of the chamber portion 2 before reaching the air ejection holes 5, 6, and air pressure entirely inside of the chamber portion 2 may become an approximately uniform pressure. Thereby, even when any measurement is not adopted with regard to the inside of the chamber portion 2, the air of approximately uniform amount can be ejected into the water through all of the plurality of air ejection holes 5, 6 formed in the bottom surface 7.

Such a predetermined internal height is imagined to depend on the water pressure at the location of the air ejection holes 5, 6. For example, it is supposed that the water pressure at the ship bottom 23 is, for example, in the range of about 4 meter water pressure to about 10 meter water pressure (the depth from the waterline is in the range of 4 meters to 10 meters). In this case, such a predetermined internal height is 40 cm or more as the lower limit. Preferably, the lower limit is 50 cm or more, and more preferably, the lower limit is 70 cm or more. The upper limit is arbitrary, but under the consideration of the space of the ship structure, the upper limit is 400 cm or less. Preferably, the upper limit is 200 cm or less, and more preferably, the upper limit is 100 cm or less. That is, the lower limit of the internal height H of the chamber portion 2 is 40 cm or more. Preferably, the lower limit of the internal height H is 50 cm or more, and more preferably, the lower limit of the internal height is 70 cm or more. The upper limit of the internal height of the chamber portion 2 is 400 cm or less. Preferably, the upper limit of the internal height is 200 cm or less, and more preferably, the upper limit of the internal height is 100 cm or less.

In addition, in order to make the air pressure of the entire inside of the chamber portion 2 approximately uniform, it is preferable that the internal width W (the internal width in a lateral direction of the ship) of the chamber portion 2 ranges from 10 cm to 500 cm. More preferably, the internal width W is 100 cm or more, and further more preferably the internal width W is 150 cm or more. Similarly, it is preferable that the internal depth D (the internal width in the longitudinal direction of the ship) of the chamber portion 2 ranges from 10 cm to 500 cm. More preferably, the internal depth D is 50 cm or more, and further more preferably the internal depth D is 100 cm or more.

Note that, if increasing the height H, it is possible to further increase the width W and depth D. Moreover, in the case that the water pressure of the ship bottom 23 is higher (the depth from the waterline is deeper: 10 m to 25 m), it is possible to lower the height H. Further, the shape of the chamber portion 2 is exemplified in a rectangular shape as shown in figures, but may be elliptic cylindrical shape or cylindrical shape to facilitate the uniform pressure.

The chamber portion 2 having such a size is filled with water in the beginning of operation. However, after the air is supplied from the air supply pipe 4 and the water is pushed out through the plurality of air ejection holes 5, 6, the chamber portion 2 is filled with the air of uniform pressure. Therefore, in the thereafter, even though the number of the air supply pipe 4 is, for example, one, the inside of the chamber portion 2 can be filled with the air of uniform pressure by supplying the air from the air supply pipe 4, and the air can be ejected approximately uniformly from all of the plurality of air ejection holes 5, 6.

The side surface and the upper surface 8 of the chamber portion 2 excluding the bottom surface 7 are made of the same material as the material of the ship bottom 23. In addition, the side surface and the upper surface 8 excluding the bottom surface 7 are joined to the ship bottom 23 in a watertight manner such that the water cannot enter inside the ship hull 20. That is, the side surface and the upper surface 8 except the bottom surface 7 is formed integrally with the ship bottom 23 by the method such as welding. Therefore, it is possible that the side surface and upper surface 8 of the chamber portion 2 except the bottom surface 7 are regarded as the ship bottom 23. In other words, the portion except the bottom 7 of the air recess 1 (of the chamber portion 2) constitutes the ship bottom 23. The material of the bottom surface 7 may be the same material as the ship bottom 23 or may be a different material from the ship bottom.

Next, the lid 3 will be further explained.

Fig. 3 is the part of the cross-sectional view for schematically indicating the configuration of the lid according to the present example. Fig. 3 is the diagram for indicating an area surrounded by the edge of the long dashed short dashed line in Fig. 2B. The lid 3 includes the lid main body 11, the hinge portion 12, and the projecting member 13. The lid main body 11 is provided to fit into the access opening, which is formed in the bottom surface 7, for accessing to the inside of the chamber portion 2. The lid 3 may have the part of the plurality of air ejection holes 5, 6 depending on the installation position in the bottom surface 7. The hinge portion 12 supports the lid main body 11 such that the lid main body 11 can open or close the access opening. The projecting member 13 is fixed to the end of the access opening at the ship inner side, is extending from the end toward the inside of the access opening and is just covering the inner circumference of the access opening. The projecting member 13 is exemplified by a doubler plate, and a material of the projecting member 13 may be steel or an elastic material such as rubber.

The material of the bottom surface 7 and the material of the lid main body 11 may be different metals from each other. In this case, the lid 3 may further include an insulating portion 14 made of insulating material. Fig. 3 indicates this state. The insulating portion 14 is disposed on the outer edge portion 11a of the ship inner side surface of the lid main body 11 such that the insulating portion 14 is disposed between the outer edge portion 11a and the inner edge portion 13a of the ship outer side surface of the projecting member 13 when the lid main body 11 closes the access opening and the outer edge portion 11a and the inner edge portion 13a are close to each other. In this case, when the lid main body 11 closes the access opening, the upper surface 14a of the insulating portion 14 on the outer edge portion 11a of the ship inner side surface of the lid main body 11 and the inner edge portion 13a of the ship outer side surface of the projecting member 13 are in contact with each other. Thereby, when the lid main body 11 closes the access opening and the air for the air lubrication is accumulated inside the chamber portion 2, it is possible to prevent the air for the air lubrication from leaking out through the gap between the lid main body 11 and the access opening.

In addition, in the case that the material of the bottom surface 7 and the material of the lid main body 11 are different metals from each other, there exists a possibility that the corrosion occurs in the bottom surface 7 or lid main body 11 by the battery like reaction via the projecting member 13 in the seawater. However, since the insulating portion 14 is disposed between the bottom surface 7 and the lid main body 11, it is possible to prevent the battery like reaction. Thereby, the occurrence of the corrosion in the bottom surface 7 or lid main body 11 can be prevented.

Note that in the case that the material of the bottom surface 7 and the material of the lid main body 11 are the same metal, the insulating portion 14 is not necessary. That is because when the lid main body 11 closes the access opening, the battery like reaction via the projecting member 13 does not occur and thereby there is no possibility to occur the corrosion in the bottom surface 7 or lid main body 11. In this case, when the lid main body 11 closes the access opening, the outer edge portion 11a of the ship inner side surface of the lid main body 11 and the inner edge portion 13a of the ship outer side surface of the projecting portion 13 are in contact with each other. Thereby, when the lid main body 11 closes the access opening and the air for the air lubrication is accumulated inside the chamber portion 2, it is possible to prevent the air for the air lubrication from leaking out through the gap between the lid main body 11 and the access opening.

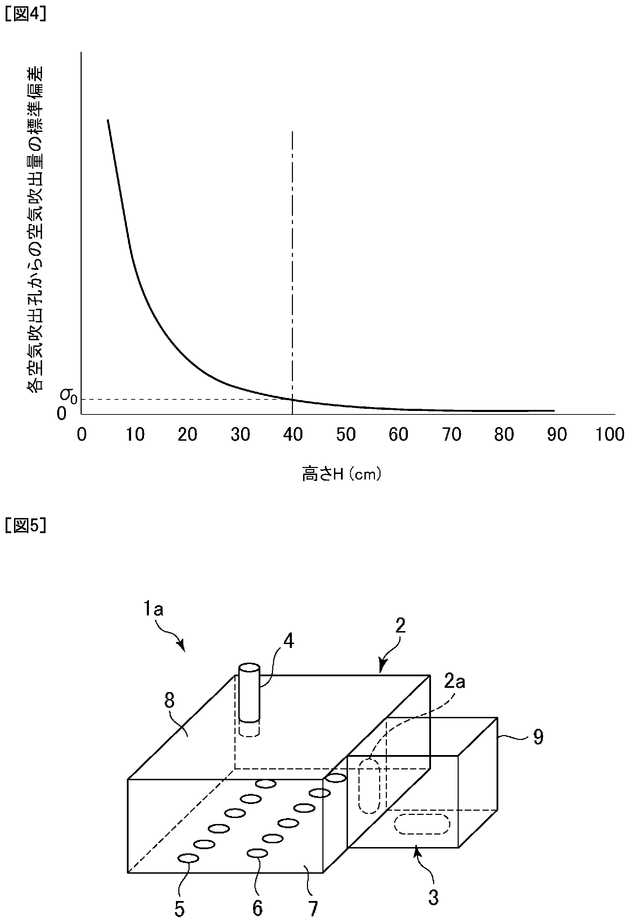

Fig. 4 is the graph for indicating the standard deviation representing the degree of variation of each air blow amount from the plurality of air ejection holes 5, 6. The vertical axis represents the standard deviation of each air blow amount blown from the each of the air ejection holes 5, 6, and the horizontal axis represents the internal height H of the chamber portion 2. Smaller amount of the standard deviation indicates more uniform state of the air blow amount from each air ejection hole. Especially, in the case that the standard deviation is a predetermined standard value σ₀ (sigma zero) or less, it is possible to say that the air blow amount blown from each of the air ejection holes 5, 6 is approximately uniform. The predetermined standard value σ₀ (sigma zero) is set to the proper value based on experiment or simulation. As shown in this figure, the standard deviation of each air blow amount becomes the predetermined standard value σ₀ (sigma zero) or less by setting the internal height H of the chamber portion 2 to 40 cm or more. That is, since the internal pressure of the air recess 1 becomes approximately uniform by setting the internal height H of the chamber portion 2 to 40 cm or more, the air can be approximately uniformly ejected from the plurality of the air ejection holes 5, 6.

Fig. 5 is the perspective view for schematically indicating the alternative structure of the air recess as the air blowing portion according to the present embodiment. According to the air recess 1 shown in Fig. 2A, the maintenance of the chamber portion 2 is performed via the lid 3 installed in the chamber portion 2. On the other hand, regarding the air recess 1a according to the embodiment, the maintenance of the chamber portion 2 is performed via the access room 9 which is additionally provided. The difference between these recesses will be mainly explained below.

The air recess 1a further includes the access room 9, and a lid 2a. Note that the access room 9 is a room disposed adjacent to the chamber portion 2. The lid 2a opens or closes an access opening, which is disposed between the chamber portion 2 and the access room 9, for accessing to the chamber portion 2. In this case the lid 3 is formed in the bottom surface of the access room 9. That is, the lid 3 opens or closes an access opening, which is formed in the bottom surface of the access room 9, for accessing to the access room 9. The configuration of the lid 2a is exemplified by the same configuration of the lid 3. However, since the lid 3 is for preventing the air leakage, the lid 2a may be different configuration from that of the lid 3.

In this case, the work person (the diver) opens the lid 3 by moving the lid 3 arranged below the access room 9 toward the lower side, and enters the inside of the access room 9 through the access opening. Next, the work person (the diver) opens the lid 2a by moving the lid 2a, and enters inside the chamber portion 2 through the access opening. Thereby, the work person (the diver) can perform the maintenance of the chamber portion 2.

### (Second Example)

The configuration of the frictional resistance reduction type ship according to the second example serving to explain features of the invention will be explained. The present example is different from the first example and embodiment in a point regarding the configuration of the air ejection holes of the air recess. The difference will be mainly explained below.

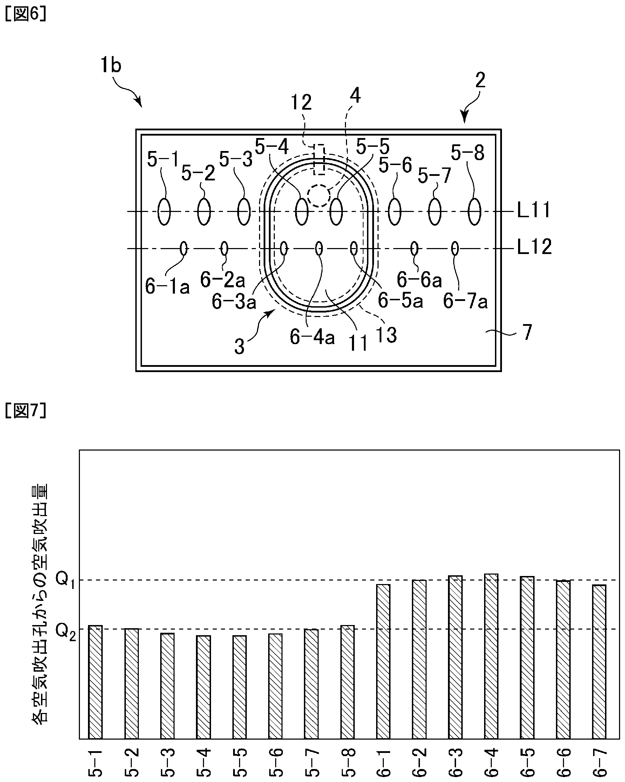

Fig. 6 is the bottom view for schematically indicating the configuration of the air recess as the air blowing portion according to the present example. The configuration of the air ejection holes 5, 6 of the air recess 1b according to the present example is different from the configuration of the air ejection holes 5, 6 of the air recess 1 according to the first example and embodiment.

The plurality of air ejection holes 5, 6 is arranged along the plurality of straight lines extending parallel to the ship width direction and the straight lines are arranged along the longitudinal direction of the ship in a side-by-side manner. The plurality of air ejection holes 5, 6 are arranged in positions not overlapping each other when viewed from the bow 21 side. Area of each of the plurality of air ejection holes closer to the bow 21 side is larger. The area of each of the plurality of air ejection holes is smaller closer to the stern 22 side. Note that in Fig. 6, the example in which the number of the plurality of straight lines is two is indicated. That is, the plurality of air ejection holes 5, 6 is arranged along the two straight lines L11, L12 extending parallel to the ship width direction and arranged along the longitudinal direction of the ship in a side-by-side manner. The plurality of air ejection holes 5, 6 is arranged in positions not overlapping each other when viewed from the bow 21 side. Therefore, it is possible to say that the plurality of air ejection holes 5, 6 is arranged in a staggered arrangement (zigzag arrangement). The area of each of the plurality of the air ejection holes 5 arranged along the bow side straight line L11 is larger than the area of each of the plurality of the air ejection holes 6 arranged along the stern side straight line L12. Note that it is possible to arrange the plurality of air ejection holes in a staggered arrangement for every several holes. The air ejection holes arranged along the straight line L11 extending parallel to the ship width direction are, for example, the air ejection holes 5-1, 5-2, 5-3, 5-4, 5-5, 5-6, 5-7, and 5-8 in order from the starboard side. The air ejection holes arranged along the straight line L12 extending parallel to the ship width direction are, for example, the air ejection holes 6-1a, 6-2a, 6-3a, 6-4a, 6-5a, 6-6a, and 6-7a in order from the starboard side. These numbers are not particularly limited.

The reason why the sizes of the plurality of ejection holes 5 arranged on the bow side 21, namely arranged on the forward side are set relatively larger than the sizes of the plurality of the ejection holes 6 arranged on the stern side 22, namely arranged on the backward side is because the inventors discover the following phenomenon. That is, a pressure loss in ejecting the air bubbles from the backward side air ejection holes becomes small by the influence of the air bubbles ejected from the forward side air ejection holes. Therefore, the ejection from the backward side air ejection holes 6 is relatively easier as compared with the ejection from the forward side air ejection holes. As a consequence, in the case that the sizes of the forward side air ejection holes 5 are equal to the sizes of the backward side air ejection holes 6, the air blow amount from the backward side air ejection holes 6 becomes larger than the air blow amount from the forward side air ejection holes 5, and these amounts become unbalanced. Thereby, there exists a possibility that it is not possible to cover the ship bottom 23 with approximately uniform air bubbles. On the other hand, in the case that the plurality of air ejection holes is densely arranged along a single straight line such that distinction between the forward side and the backward side is eliminated, there exists a possibility that the strength of the ship hull 20 against the longitudinal bending becomes reduced. So, it is not preferable. In the case that the plurality of air ejection holes is sparsely arranged along the single straight line, there exists a possibility that it is not possible to cover the ship bottom 23 with approximately uniform air bubbles. So, it is not preferable.

Therefore, according to the present example, the sizes of the forward side air ejection holes 5 are set to be relatively larger than the sizes of the backward side air ejection holes 6, while the plurality of air ejection holes 5, 6 is arranged in the staggered arrangement. Thereby, it is possible that the air blow amount from the forward side air ejection holes 5 and the air blow amount from the backward side air ejection holes 6 are balanced (are approximately the same amount), while ensuring the strength of the ship hull 20. As a result, it is possible that the ship bottom 23 is covered with approximately uniform air bubbles, and that the effect of reducing the frictional resistance is maximized.

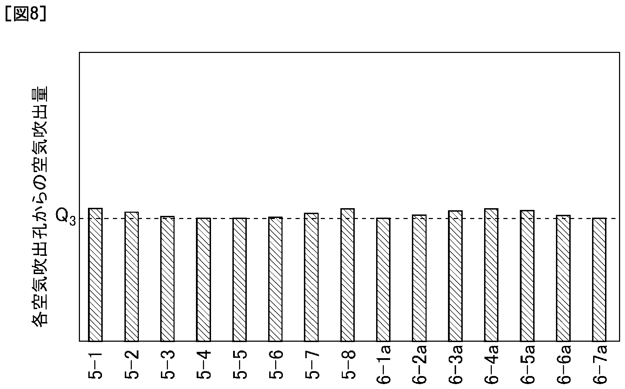

Fig. 7 and Fig. 8 are graphs for indicating the distribution of the air flow rates ejected from the plurality of air ejection holes arranged on the ship bottom 23. Note that Fig. 7 is for indicating the case in which the sizes of the air ejection holes 5, 6 are set to be equal to each other (as shown in Fig. 2A). Fig. 8 is for indicating the case that, regarding the plurality of air ejection holes arranged on the ship bottom, the sizes of the forward side air ejection holes 5 are set to be relatively larger than the sizes of the backward side air ejection holes 6 (as shown in Fig. 6). In the both graphs, the vertical axis represents the air flow rate blown from the plurality of air ejection holes 5, 6, and the horizontal axis represents the locations of the air ejection (the air ejection holes 5, 6). In adopting the air ejection holes 5, 6 having the configuration shown in Fig. 2A, the air blow amount (approximately Q₁) from the backward side air ejection holes 6 becomes larger than the air blow amount (approximately Q₂) from the forward side air ejection holes 5 as shown in Fig. 7. On the other hand, in adopting the air ejection holes 5, 6 having the configuration shown in Fig. 6, the air blow amount from the backward side air ejection holes 6 and the air blow amount from the forward side air ejection holes 5 become approximately equal to each other (approximately Q₃) as shown in Fig. 8. That is, by adopting the air recess 1b having the configuration shown in Fig. 6, it is possible to make the air flow rate ejected from each of the plurality of air ejection holes 5, 6 approximately uniform. Thereby, it is possible to make the air bubble distribution at the ship bottom 23 approximately uniform.

As described above, according to above mentioned each example and embodiment, it is possible that the air is ejected from the plurality of air ejection holes in substantially the same way to form the air bubbles when the air is ejected from the plurality of air ejection holes disposed on the ship bottom. In addition, it is possible that the ship bottom is approximately uniformly covered with the air bubbles.

Moreover, according to above mentioned each example and embodiment, since the lid is provided on the air recess, it is possible for the diver to check or repair the recess. Thereby, it is possible to perform the inspection or repair of the air recess easily and frequently.

It is apparent that the present invention is not limited to the above mentioned each embodiment, and various modification can be performed on the above mentioned each embodiment within the scope of the appended claims. Further, the above mentioned each example and embodiment can be applicable to another example and embodiment as long as the technical contradiction does not occur.

## Claims

1. A frictional resistance reduction type ship (50) comprising:
an air blowing portion (1a;51-53) disposed on a ship bottom (23), wherein the air blowing portion (1a;51-53) comprises:
an air supply pipe (4) configured to supply air; and
a chamber portion (2) having an upper surface (8) and a bottom surface (7), the upper surface (8) connected to the air supply pipe (4), the bottom surface (7) having a plurality of air ejection holes (5,6);
wherein an internal height (H) of the chamber portion (2) ranges from 40 cm to 200 cm,
an access room (9) arranged adjacent to the chamber portion (2);
a first lid (3) configured to open or close a first access opening arranged in a bottom surface of the access room (9); and
a second lid (2a) configured to open or close a second access opening arranged between the chamber portion (2) and the access room (9).

2. The frictional resistance reduction type ship (50) according to claim 1,
wherein an internal width (W) of the chamber portion (2) ranges from 10 cm to 400 cm,
wherein an internal depth (D) of the chamber portion (2) ranges from 10 cm to 400 cm.

3. The frictional resistance reduction type ship (50) according to claim 1 or 2,
wherein a distance from a waterline to the ship bottom (23) ranges from 4 m to 25 m.

4. The frictional resistance reduction type ship (50) according to any one of claims 1 to 3,
wherein a side surface and the upper surface (8) of the chamber portion (2) are integrally formed with the ship bottom (23) and are made of the same material as the material of the ship bottom (23).

5. The frictional resistance reduction type ship (50) according to claim 4,
wherein the air blowing portion (1a;51-53) includes a room for accommodating the air.

6. The frictional resistance reduction type ship (50) according to any one of claims 1 to 5,
wherein a single air supply pipe (4) is provided.

7. The frictional resistance reduction type ship (50) according to any one of claims 1 to 6, wherein an area of each of the plurality of air ejection holes (5) arranged closer to a bow (21) side of the ship bottom (23) is larger than that of the ejection holes (6) arranged closer to the stern (22) side of the ship bottom (23).

## Patentansprüche

1. Ein Schiff vom Typ mit reduziertem Reibungswiderstand (50), mit:
einem Luftausblasabschnitt (1a;51-53), der an einem Schiffsboden (23) angeordnet ist, wobei der Luftausblasabschnitt (1a;51-53) aufweist:
ein Luftzufuhrrohr (4), das konfiguriert ist, um Luft zuzuführen, und
einen Kammerabschnitt (2) mit einer oberen Oberfläche (8) und einer unteren Oberfläche (7), wobei die obere Oberfläche (8) mit dem Luftzufuhrrohr (4) verbunden ist und die untere Oberfläche (7) eine Vielzahl von Luftausstoßlöchern (5,6) aufweist,
wobei eine interne Höhe (H) des Kammerabschnitts (2) von 40 cm bis 200 cm reicht,
ein Zugangsraum (9) angrenzend an den Kammerabschnitt (2) angeordnet ist,
ein erster Deckel (3) konfiguriert ist, um eine erste Zugangsöffnung, die in einer Bodenoberfläche des Zugangsraums (9) angeordnet ist, zu öffnen oder zu schließen, und
ein zweiter Deckel (2a) konfiguriert ist, um eine zweite Zugangsöffnung, die zwischen dem Kammerabschnitt (2) und dem Zugangsraum (9) angeordnet ist, zu öffnen oder zu schließen.

2. Das Schiff vom Typ mit reduziertem Reibungswiderstand (50) gemäß Anspruch 1,
wobei eine interne Weite (W) des Kammerabschnitts (2) von 10 cm bis 400 cm reicht,
wobei eine interne Tiefe (D) des Kammerabschnitts (2) von 10 cm bis 400 cm reicht.

3. Das Schiff vom Typ mit reduziertem Reibungswiderstand (50) gemäß Anspruch 1 oder 2,
wobei eine Distanz von einer Wasserlinie zu dem Schiffsboden (23) von 4 m bis 25 m reicht.

4. Das Schiff vom Typ mit reduziertem Reibungswiderstand (50) gemäß einem der Ansprüche 1 bis 3,
wobei eine Seitenoberfläche und die obere Oberfläche (8) des Kammerabschnitts (2) integral mit dem Schiffsboden (23) ausgebildet sind und aus demselben Material wie das Material des Schiffsbodens (23) hergestellt sind.

5. Das Schiff vom Typ mit reduziertem Reibungswiderstand (50) gemäß Anspruch 4,
wobei der Luftausblasabschnitt (1a;51-53) einen Raum zur Aufnahme der Luft aufweist.

6. Das Schiff vom Typ mit reduziertem Reibungswiderstand (50) gemäß einem der Ansprüche 1 bis 5,
wobei ein einzelnes Luftzufuhrrohr (4) vorgesehen ist.

7. Das Schiff vom Typ mit reduziertem Reibungswiderstand (50) gemäß einem der Ansprüche 1 bis 6, wobei eine Fläche von jedem der Vielzahl von Luftausstoßlöchern (5), die näher bei einer Seite eines Bugs (21) des Schiffsbodens (23) angeordnet sind, größer ist als die der Ausstoßlöcher (6), die näher an der Seite des Hecks (22) des Schiffsbodens (23) angeordnet sind.

## Revendications

1. Navire (50) de type à réduction de la résistance au frottement comportant :
une partie (la; 51 à 53) de soufflage d'air disposée sur une partie (23) de fond du navire, la partie (la; 51 à 53) de soufflage d'air comportant :
un tuyau (4) d'alimentation en air configuré pour fournir de l'air; et
une partie (2) formant chambre ayant une surface (8) supérieure et une surface (7) de fond, la surface (8) supérieure étant reliée au tuyau (4) d'alimentation en air, la surface (7) de fond ayant une pluralités de trous (5, 6) d'éjection d'air;
dans lequel une hauteur (H) intérieure de la partie (2) formant chambre est comprise entre 40 cm et 200 cm,
une zone (9) d'accès disposée adjacente à la partie (2) formant chambre;
un premier capot (3) configuré pour ouvrir ou fermer une première ouverture d'accès disposée dans une surface de fond de la zone (9) d'accès; et
un second capot (2a) configuré pour ouvrir ou fermer une deuxième ouverture d'accès disposée entre la partie (2) formant chambre et la zone (9) d'accès.

2. Navire (50) de type à réduction de la résistance au frottement suivant la revendication 1,
dans lequel une largeur (W) intérieure de la partie (2) formant chambre est comprise entre 10 cm et 400 cm,
dans lequel une profondeur (D) intérieure de la partie (2) formant chambre est comprise entre 10 cm et 400 cm.

3. Navire (50) de type à réduction de la résistance au frottement suivant la revendication 1 ou 2,
dans lequel une distance d'une ligne de flottaison jusqu'au fond (23) du navire est comprise entre 4 m et 25 m.

4. Navire (50) de type à réduction de la résistance au frottement suivant l'une quelconque des revendications 1 à 3,
dans lequel une surface latérale et la surface (8) supérieure de la partie (2) formant chambre sont formées d'une seule pièce avec le fond (23) du navire et sont réalisées en le même matériau que le matériau du fond (23) de navire.

5. Navire (50) de type à réduction de la résistance au frottement suivant la revendication 4,
dans lequel la partie (la; 51 à 53) de soufflage d'air comporte une zone pour recevoir l'air.

6. Navire (50) de type à réduction de la résistance au frottement suivant l'une quelconque des revendications 1 à 5,
dans lequel un tuyau (4) d'alimentation en air unique est prévu.

7. Navire (50) de type à réduction de la résistance au frottement suivant l'une quelconque des revendications 1 à 6,
dans lequel une aire de chaque trou de la pluralité de trous (5) d'éjection d'air agencés plus proches du côté (21) de la proue du fond (23) du navire est plus grande que l'aire des trous (6) d'éjection agencés plus proche du côté de la poupe (22) du fond (23) de navire.
